# EUROPÄISCHE PATENTSCHRIFT

(11) **EP 2 017 409 B1**
(45) Veröffentlichungstag und Bekanntmachung des Hinweises auf die Patenterteilung: **11.01.2012**
(21) Anmeldenummer: 08019094.5
(22) Anmeldetag: 13.11.2006
(51) Int. Cl.: E05B 17/22, F16P 3/10

(54) **Sicherheitsschalter zum Erzeugen eines Freigabesignals in Abhängigkeit von der Position einer beweglichen Schutztür**
Safety switch for creating a release signal depending on the position of a moveable safety door
Interrupteur de sécurité destiné à produire un signal de libération en relation avec la position d'une porte de sécurité mobile

(30) Priorität: 28.11.2005 DE 102005057108
(43) Veröffentlichungstag der Anmeldung: 21.01.2009
(62) Teilanmeldung aus: 06023548.8
(73) Patentinhaber: Pilz GmbH & Co. KG, 73760 Ostfildern (DE)
(72) Erfinder: Pullmann, Jürgen, 73061 Ebersbach (DE); Rupp, Roland, 73110 Hattenhofen (DE); Veit, Andreas, 70794 Filderstadt (DE); Eichinger, Peter, Dr., 71364 Winnenden (DE)
(74) Vertreter: Duhme, Torsten

(56) Entgegenhaltungen:
- EP-A- 0 136 570
- EP-A- 0 600 795
- EP-A- 1 288 401
- WO-A-85/03970
- WO-A-97/21893
- DE-A1- 2 153 256
- DE-A1- 4 000 643
- DE-A1- 4 015 797
- US-A- 5 029 912

## Beschreibung

Die vorliegende Ereindung betrifft einen Sicherheitsschalter zum Erzeugen eines Freigabesignals in Abhängigkeit von der Position einer beweglichen Schütztür.

Gattungsgemäße Sicherheitsschalter werden auch als Verriegelurigseinrichtungen mit Zuhaltung bezeichnet Sie werden eingesetzt an Schutztüren, Schutzklappen und dergleichen, die den Zugang zu einer automatisiert arbeitenden Maschine oder Anlage verhindern sollen, solange sich die Maschine oder Anlage in einem gefahrbringenden Zustand befindet. Bei der Maschine kann es sich beispielsweise um einen Roboter, eine Werkzeugmaschine mit schnell drehender Spindel, eine Transport- oder Förderanlage, eine Presse oder eine andere Maschine oder Anlage handeln, von deren Betrieb eine Gefahr für Personen ausgeht, die sich im Arbeitsbereich der Maschine befinden. Die Sicherheitsschalter können als Meldegeräte dienen, mit deren Hilfe eine Steuereinrichtung den geschlossenen Zustand der Schutztür erkennen kann. Die Steuereinrichtung ist dazu ausgebildet, eine Inbetriebnahme der Maschine oder Anlage nur zu ermöglichen, wenn die Schutztür geschlossen ist. Wird die Schutztür im laufenden Betrieb geöffnet (sofern möglich), muss die Steuereinrichtung die Maschine oder Anlage in einen gefahrlosen Zustand bringen, indem beispielsweise die Stromversorgung zu der Maschine oder Anlage abgeschaltet wird.

Es gibt eine Vielzahl von Maschinen und Anlagen, von denen auch nach dem Abschalten noch für eine gewisse Zeit eine Gefahr ausgeht, beispielsweise weil die Maschine oder Anlage noch ausläuft. Für derartige Anwendungsfälle werden. Sicherheitsschalter benötigt, die ein Öffnen der Schutztür solange verhindern, bis die Maschine oder Anlage ihren gefahrlosen Zustand erreicht hat. Diese Funktion wird als Zuhaltung bezeichnet.

Klassischerweise besitzen die bekannten Sicherheitsschalter einen sogenannten Betätiger, der an der beweglichen Schutztür angeordnet ist. Bei geschlossener Schutz- _ tür greift der Betätiger in eine Betätigeraufnahme am Türrahmen, was mit Hilfe eines oder mehrerer Sensoren detektiert wird Bei einem Sicherheitsschalter mit Zuhaltung wird der Betätiger außerdem in der Betätigeraufhahme gegen ein Zurückziehen blockiert. Der Betätiger erfüllt in diesem Fall also zwei Funktionen, nämlich einerseits als Detektorelement, mit dessen Hilfe die Schließposition der Schutztür detektiert werden kann, und andererseits als Riegel, der ein Öffnen der Schutztür solange verhindert, wie der Betätiger in der Betätigeraufnahme blockiert ist. Die Freigabe des Betätigers kann beispielsweise über einen elektromotorischen Aktor erfolgen, der von der Steuereinrichtung betätigt wird, sobald die überwachte Maschine oder Anlage ihren sicheren Zustand eingenommen hat.

Ein Beispiel für einen solchen Sicherheitsschalter ist in DE 43 28 297 C1 offenbart. Der Betätiger (dort als Schlüssel bezeichnet) ist eine flache Metallplatte mit einer zentralen Öffnung, in die ein Nocken eingreifen kann, um die Zuhaltung zu realisieren. Die Betätigeraufnahme ist ein schmaler Kanal, dessen Innenabmessungen nur geringfügig größer sind als die Außenabmessungen des Betätigers. Der bekannte Sicherheitsschalter besitzt daher den Nachteil, dass die Schutztür und der Rahmen sehr genau zueinander ausgerichtet sein müssen, damit der Betätiger in die Betätigeraufnahme eingreifen kann. Entsprechend aufwendig ist die Montage dieses bekannten Sicherheitsschalters. Probleme ergeben sich außerdem, wenn sich die Schutztür im Laufe der Zeit absenkt, so dass die Montagetoleranzen nicht mehr eingehalten werden. In diesem Fall lässt sich die Schutztür nicht mehr richtig schließen.

Aus DE 196 24 172 C2 ist ein anderer Sicherheitsschalter bekannt, bei dem der Betätiger in eine schmale Betätigeraufnahme eingeführt werden muss. Auch dieser bekannte Sicherheitsschalter erfordert enge Montagetoleranzen.

In WO 00/64054 sind verschiedene Ausführungsbeispiele von gattungsgemäßen Sicherheitsschaltern beschrieben, wobei der mechanische Aufbau allerdings nur sehr schematisch dargestellt ist. Kennzeichnend für diese bekannten Sicherheitsschalter ist, dass der Betätiger und die Betätigeraufnahme jeweils Signalmittel aufweisen, die derart angeordnet sind, dass ein Signalaustausch nur bei sperrendem Eingriff möglich ist. Der Vorteil dieser Realisierung liegt darin, dass nur ein einziger Sensor benötigt wird, um die sicherheitstechnischen Anforderungen der einschlägigen europäischen Norm EN 1088 zu erfüllen. Die oben geschilderten Probleme im Zusammenhang mit engen Montagetoleranzen sind in WO 00/64054 nicht thematisiert.

Die DE 103 05 704 B3 beschreibt einen Sicherheitsschalter, der große Montagetoleranzen und ein Absinken der Schutztür ermöglichen soll. Der bekannte Sicherheitsschalter besitzt einen Betätiger, der über einen Handgriff zwischen einer ersten und einer zweiten Position verstellbar ist. Ferner weist der bekannte Sicherheitsschalter einen Sensor auf, der dazu ausgebildet ist, zumindest eine der Positionen der Betätigers eindeutig zu detektieren, um in Abhängigkeit davon ein Freigabesignal zu erzeugen. In der zweiten Position ragt der Betätiger so weit aus dem Türteil hinaus, dass er in eine Betätigeraufnahme am Rahmenteil eingreifen kann und dabei die Schutztür verriegelt. Im Rahmenteil ist ein verschwenkbares Sperrglied vorgesehen, mit dessen Hilfe der Betätiger in der Betätigeraufnahme blockiert werden kann. Sowohl der Betätiger als auch das Sperrglied besitzen vertikal verlaufende (bei normaler Einbaulage), aneinander angepasste Nuten und Vorsprünge, die im blockierten Zustand ineinander greifen. Da die Nuten und Vorsprünge allein in vertikaler Richtung verlaufen, können sich der Betätiger und das Sperrglied in vertikaler Richtung gegeneinander bewegen. Infolge dessen bietet dieser bekannte Sicherheitsschalter eine erhöhte Montagetoleranz in vertikaler Richtung. In horizontaler Richtung ist die Bewegungsfreiheit durch die Tiefe der Nuten und Vorsprünge begrenzt,

Aus DE 40 15 797 A1 ist ein Sicherheitsschalter bekannt, der aus einem Rahmenteil und einem Türteil aufgebaut ist. In dem Rahmenteil ist ein mehrteilig ausgebildeter Betätiger angeordnet, der einen Riegelbolzen, eine Sicherungshohlwelle und eine Betätigungswelle aufweist. Dieser mehrteilige Betätiger ist zwischen einer ersten und einer zweiten Position verstellbar, wobei der Riegelbolzen in der zweiten Position in eine in dem Türteil vorhandene Ausnehmung eingreift. In dem Rahmenteil ist ebenfalls ein Bolzen angeordnet, der den Betätiger in der zweiten Position dadurch blockiert, dass er in eine Aussparung der Sicherungshohlwelle eingreift. Der Bolzen ist an einem Anker eines Elektrohubmagneten montiert und fällt in die Aussparung der Sicherungshohlwelle ein, wenn sich der Betätiger in der zweiten Position befindet. Die zweite Position wird mittels eines Mikroschalters detektiert. Hierzu wirkt der Stößel des Mikroschalters mit dem Kamm eines auf dem Riegelbolzen befindlichen Nockens zusammen. Zur Entriegelung wird der Elektrohubmagnet eingeschaltet, wodurch der Bolzen aus der Aussparung der Sicherungshohlwelle herausgezogen wird und somit der Betätiger aus der Ausnehmung des Türteils herausgeführt werden kann. Bei diesem Sicherheitsschalter sind der Betätiger und das Sperrglied in einem Teil des Sicherheitsschalters, nämlich dem Rahmenteil, angeordnet

Vor diesem Hintergrund ist es eine Aufgabe der vorliegenden Erfindung, einen alternativen Sicherheitsschalter mit Zuhaltung anzugeben, der möglichst einfach, kostengünstig und zuverlässig zu realisieren ist und der zudem große Montagetoleranzen erlaubt.

Diese Aufgabe wird gemäß einem Aspekt der vorliegenden Erfindung durch einen Sicherheitsschalter gemäß Auspruch 1 gelöst.

Die vorliegende Erfindung geht damit erstmals den Weg, die Funktion der Zuhaltung in dem beweglichen Türteil zu realisieren, und dabei den Aktor, mit dem das Sperrlied freigegeben wird, In dem Rahmenteil unterzubringen. Im Gegensatz dazu sind die für die Zuhaltung benötigten Spenglieder bei bekannten Sicherheitsschaltern in oder an den (in der Regel feststehenden) Rahmenteil angeordnet Dieser übliche Aufbau macht es erforderlich, das freie Ende des Betätigers, das in die Betätigeraufnahme einfährt, so zu gestalten, dass es in der Betätigeraufnahme blockiert werden kann. Es sind also stets Nuten, Vorsprünge, Ausnehmungen, Öffnungen und deigleichen am freien Ende des Betätigers erforderlich, in die ein Sperrglied des Rahmenteils eingreift. Eine sichere und zuverlässige Funktion ist in diesen Fällen nur gewährleistet, wenn das Sperrglied und das freie Ende des Betätigers mit hinreichender Passgenauigkeit ineinander eingreifen. Die Passgenauigkeit bestimmt und begrenzt die Montagetoleranzen. Im Gegensatz dazu ermöglicht es die vorliegende Erfindung, das freie Ende des Betätigers "beliebig" auszubilden und es kann mit sehr großen Toleranzen in die Betätigeraufnahme eingeführt werden, weil die Verriegelung an einer anderen Stelle des Betätigers, nämlich im Türteil, erfolgt. Es genügt, wenn das freie Ende des Betätigers in eine Art Schlosstasche am Rahmenteil einfährt, so dass ein Öffnen der Schutztür quer zur Bewegungsrichtung des Betätigers verhindert wird. Die Verriegelung des Betätigers in der Schlosstasche erfolgt jedoch "von hinten", weshalb der Betätiger in der Schlosstasche mit großen Toleranzen aufgenommen werden kann. Das neue Konzept bietet somit große Montagetoleranzen sowohl in vertikaler als auch in horizontaler Richtung.

Zu einer einfachen Realisierung des Sicherheitsschalters tragen zwei Maßnahmen bei. Zum einen ist das Sperrglied durch eine Feder und somit ohne elektrische Zusatzenergie von außen in einer "sicheren" Position vorgespannt. Das Sperrglied blockiert den Betätiger daher automatisch, sobald eine Blockade überhaupt möglich ist. Für das Türteil sind folglich keine elektrischen Versorgungsleitungen erforderlich. Dies ist eine besonders einfache und zuverlässige Realisierung. Zum anderen trägt die Anordnung des Aktors in dem Rahmenteil dazu bei, dass das Türteil einfach zu montieren ist. Im Falle eines elektrisch ausgebildeten Aktors kommt das Türteil ohne elektrische Versorgungsleitungen aus.

Insgesamt erlaubt das neue Konzept große Montagetoleranzen und kann zudem sehr einfach, kostengünstig und zuverlässig realisiert werden, wie nachfolgend anhand bevorzugter Ausführungsbeispiele weiter dargestellt ist.

Die genannte Aufgabe ist daher vollständig gelöst.

In einer Ausgestaltung weist der Betätiger ein freies Ende auf, das zumindest in der Vertikalen weitgehend spiegelsymmetrisch ausgebildet ist.

Bevorzugt ist das freie Ende des Betätigers sowohl in der Vertikalen als auch in der Horizontalen spiegelsymmetrisch. In einem Ausführungsbeispiel ist das freie Ende des Betätigers im Querschnitt rechteckig. Die Ausgestaltung besitzt den Vorteil, dass der neue Sicherheitsschalter mit geringem Aufwand in verschiedenen Montagepositionen verwendet werden kann, beispielsweise Türanschlag rechts oder Türanschlag links. Dadurch lässt sich die Teilezahl für den neuen Sicherheitsschalter reduzieren. Der neue Sicherheitsschalter kann noch kostengünstiger realisiert werden.

In einer weiteren Ausgestaltung ist der Sensor dazu ausgebildet, die zweite Position des Betätigers fehlersicher zu detektieren.

"Fehlersicher" bedeutet in diesem Fall, dass der Sensor die zweite Position des Betätigers nur dann detektieren kann, wenn sich der Betätiger auch tatsächlich in der zweiten Position befindet. Besonders bevorzugt ist es, wenn der Sensor an dem Rahmenteil angeordnet ist, insbesondere im Bereich der Ausnehmung. In diesem Fall genügt nämlich ein einziger Sensor, um die verriegelte Position der Schutztür zuverlässig zu erkennen, was zu einer Freigabe der überwachten Maschine oder Anlage führen kann. Die Anordnung des Sensors im Bereich der Ausnehmung ist besonders bevorzugt, weil sie eine kleinbauende Realisierung mit einer hohen Fehlersicherheit ermöglicht.

In einer weiteren bevorzugten Ausgestaltung ist der Sensor zum Auslesen einer ID-Marke, insbesondere zum Auslesen eines sogenannten Transponders ausgebildet, und der Betätiger beinhaltet eine ID-Marke, die so angeordnet ist, dass sie in einer der zwei Positionen von dem Sensor auslesbar ist. Vorzugsweise ist die ID-Marke so angeordnet, dass sie nur genau in der zweiten Position des Betätigers auslesbar ist. Dies kann beispielsweise dadurch realisiert werden, dass als ID-Marke ein Transponder verwendet wird, der in einer Vertiefung am freien Ende des Betätigers angeordnet ist. Hierdurch wird ein geringer Schaltabstand erreicht, der gewährleistet, dass der Sensor nur dann anspricht, wenn der Betätiger mit der ID-Marke in die Ausnehmung eingefahren ist. Diese bevorzugten Ausgestaltungen ermöglichen eine besonders einfache und kostengünstige Realisierung, die zugleich eine hohe Fehlersicherheit bietet.

In einer weiteren Ausgestaltung ist die ID-Marke an einer freien Stirnseite des Betätigers angeordnet, die in etwa quer zur Bewegungsrichtung des Betätigers liegt. Vorzugsweise ist die ID-Marke auf der Stirnseite versenkt angebracht. Der Sensor sitzt bevorzugt am Grund der Ausnehmung, also gegenüber von dem freien Ende des einfahrenden Betätigers.

Diese Ausgestaltungen sind eine besonders einfache Möglichkeit, um eine fehlersichere Auswertung in verschiedenen Montagepositionen des neuen Sicherheitsschalters zu erreichen. Die ID-Marke wird hier parallel zur Bewegungsachse des Betätigers in die Ausnehmung vorgeschoben, was unabhängig von der Montageposition eine sehr zuverlässige Detektion in der Betätigeraufnahme ermöglicht.

In einer weiteren Ausgestaltung weist das Türteil eine erste Feder auf, die den Betätiger in die erste Position vorspannt.

Diese Ausgestaltung besitzt den Vorteil, dass der Betätiger automatisch in die "unsichere" erste Position bewegt wird, wenn das Sperrglied in seiner Funktion versagt. Da die Freigabe der Maschine oder Anlage von der Position des Betätigers abhängt, wird ein Funktionsfehler des wichtigen Sperrgliedes auf diese Weise einfach und schnell erkannt. Darüber hinaus besitzt die Vorspannung des Betätigers mit Hilfe einer Feder den Vorteil, dass das Türteil ohne elektrische Energieversorgung auskommt, was die Montage des neuen Sicherheitsschalters weiter vereinfacht.

In einer weiteren Ausgestaltung handelt es sich bei dem Aktor um einen elektrisch angetriebenen Aktor, beispielsweise einen Hubmagneten.

Besonders die Anordnung eines elektrisch angetriebenen Aktors in dem Rahmenteil trägt dazu bei, dass das Türteil einfach zu montieren ist, denn es kommt ohne elektrische Versorgungsleitungen aus. Die Verwendung eines Hubmagneten oder eines ähnlichen translatorischen Aktors hat sich als besonders effiziente Lösung erwiesen, um eine Freigabe des Sperrgliedes zu erreichen, da die Freigabe in dieser Ausgestaltung über den Türspalt zwischen Rahmenteil und Türteil erfolgen muss.

In einer weiteren Ausgestaltung beinhaltet der neue Sicherheitsschalter einen Impulsgeber, über den der Aktor kurzzeitig mit Antriebsenergie beaufschlagbar ist. Vorteilhafterweise liefert der Impulsgeber einen Stromimpuls. Des weiteren ist bevorzugt, wenn der Impulsgeber manuell betätigt werden kann.

Die oben beschriebene Verwendung einer ersten Feder zum Vorspannen des Betätigers in der ersten Position ermöglicht es, die Freigabe des neuen Sicherheitsschalters mit einem kurzen Impuls zu realisieren. Diese Ausgestaltung besitzt den Vorteil, dass der Aktor bei geöffneter Schutztür nicht bestromt werden muss. Im Gegensatz dazu sind die bekannten Sicherheitsschalter so ausgebildet, dass sie einen dauernden Stromfluss bei geöffneter Schutztür benötigen. Die Verwendung eines manuell betätigten Impulsgebers besitzt darüber hinaus den Vorteil, dass die Schutztür nach einer Freigabe nur gezielt geöffnet werden kann, ohne dass es hierzu eines besonderen Kraftaufwandes bedarf. Der Vorteil macht sich besonders bei weitläufigen Anlagen mit mehreren Schutztüren bemerkbar, da sich die zahlreichen Schutztüren nicht schon bei der Freigabe durch die Steuereinrichtung, sondern erst durch eine gezielte manuelle Betätigung öffnen. Ein unnötiges Aufspringen von Schutztüren, die anschließend manuell wieder geschlossen werden müssten, wird dadurch vermieden.

In einer weiteren Ausgestaltung weist das Türteil ein Stellglied auf, das zwischen einer fünften und einer sechsten Position bewegbar ist, wobei der Aktor das Stellglied in die fünfte Position bewegt, um das Sperrglied gegen die zweite Feder in die vierte Position zu bewegen.

In dieser Ausgestaltung ist das Stellglied, das eine Bewegung des rahmenseitigen Aktors auf das Türteil überträgt, Bestandteil des Türteils. Diese Ausgestaltung ermöglicht eine kompakte Bauform, weil das Sperrglied unabhängig von dem Aktor ausgebildet werden kann.

In einer weiteren Ausgestaltung ist das Stellglied entlang von einer Bewegungsachse bewegbar, die in etwa parallel zu der Bewegungsrichtung des Betätigers verläuft.

Diese Ausgestaltung ermöglicht eine sehr effiziente Kraftübertragung, so dass das Sperrglied mit geringem Energieaufwand freigegeben werden kann. Außerdem lassen sich die Montagetoleranzen unabhängig von der Freigabe des Sperrgliedes maximieren.

In einer weiteren Ausgestaltung ist das Stellglied innerhalb des Betätigers angeordnet.

Diese Ausgestaltung führt zu einer besonders kompakten und effizienten Realisierung des neuen Sicherheitsschalters.

In einer weiteren Ausgestaltung beinhaltet der neue Sicherheitsschalter eine dritte Feder, die das Stellglied in der sechsten Position vorspannt.

Diese Ausgestaltung gewährleistet, dass sich das Stellglied stets in einer definierten Position befindet, und zwar wiederum ohne elektrisch zugeführte Energie. Dadurch trägt diese Ausgestaltung zu einem einfachen und zuverlässigen Aufbau des neuen Sicherheitsschalters bei.

In einer weiteren Ausgestaltung weist das Türteil einen Handgriff auf, der zwischen einer greifbaren und einer versenkten Position bewegbar ist, wobei der Handgriff so mit dem Betätiger gekoppelt ist, dass sich der Handgriff in der versenkten Position befindet, wenn der Betätiger in der zweiten Position ist.

Diese Ausgestaltung besitzt den Vorteil, dass die Schutztür nach einer Freigabe sehr einfach geöffnet und vor allem wieder geschlossen werden kann. Darüber hinaus fungiert der versenkbare Handgriff auch als optische Anzeige, die einen sicheren Verschluss der Schutztür signalisiert, und er erschwert eine gewaltsame Manipulation an der Schutztür.

In einer weiteren Ausgestaltung beinhaltet der neue Sicherheitsschalter einen Not-Aus-Taster und/oder einen Quittungstaster.

Die Integration eines Not-Aus-Tasters und/oder eines Quittungstasters in den neuen Sicherheitsschalter trägt zu einer weiteren Reduzierung des Montageaufwandes bei. Ein Not-Aus-Taster dient dazu, eine überwachte Maschine oder Anlage in einer Gefahrensituation schnell von Hand in einen sicheren Zustand zu bringen. Die Integration eines solchen Tasters in den neuen Sicherheitsschalter ist besonders vorteilhaft, weil der Sicherheitsschalter aufgrund der Zuhaltung keine NotAbschaltung der Maschine oder Anlage ermöglicht. Die Integration eines Quittungstasters ermöglicht es, das Schließen einer Schutztür manuell zu quittieren, was vorteilhafterweise für eine erneute Inbetriebnahme der Maschine oder Anlage verwendet werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Vorrichtung mit einem erfindungsgemäßen Sicherheitsschalter,
- Fig. 2: ein Ausführungsbeispiel des Sicherheitsschalters aus Fig. 1 in einer teilweise geschnittenen, schematischen Darstellung,
- Fig. 3: den Sicherheitsschalter aus Fig. 2 mit weiteren Details,
- Fig. 4: den Sicherheitsschalter aus Fig. 3 beim Öffnen der Zuhaltung, und
- Fig. 5: den Sicherheitsschalter aus Fig. 3 mit geöffneter Zuhaltung.

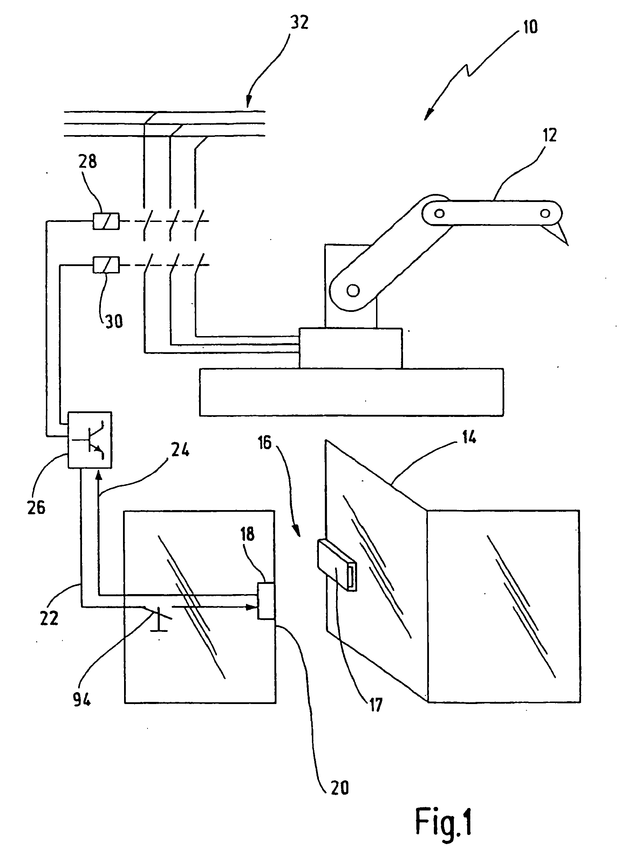

In Fig. 1 ist eine Vorrichtung mit dem neuen Sicherheitsschalter in ihrer Gesamtheit mit der Bezugsziffer 10 bezeichnet. Die Vorrichtung 10 beihaltet hier einen Roboter 12, dessen Arbeitsbereich mit Hilfe einer Schutztür 14 abgesichert ist. An der Schutztür 14 ist ein Sicherheitsschalter 16 gemäß der vorliegenden Erfindung angeordnet. Der Sicherheitsschalter 16 beinhaltet ein Türteil 17, das an der beweglichen Schutztür 14 befestigt ist, und ein Rahmenteil 18, das an einem Türgegenstück 20 sitzt. In dem dargestellten Ausführungsbeispiel ist das Türgegenstück 20 ein feststehender Anschlag für die Schutztür 14. In anderen Ausführungsbeispielen kann das Türgegenstück 20 ein zweiter Türflügel einer zweiteiligen Schutztür sein.

Das Rahmenteil 18 ist über zwei Leitungen 22, 24 mit einem Sicherheitsschaltgerät 26 verbunden. Das Sicherheitsschaltgerät 26 ist beispielsweise ein Sicherheitsschaltgerät aus der Reihe PNOZ®, die von der Anmelderin der vorliegenden Erfindung vertrieben wird. Es handelt sich hierbei um mehrkanalig-redundante Sicherheitsschaltgeräte, die dazu ausgebildet sind, die Ausgangssignale von Meldegeräten, wie dem Sicherheitsschalter 16, auszuwerten und in Abhängigkeit davon einen elektrischen Verbraucher abzuschalten. Der elektrische Verbraucher ist in diesem Fall der Roboter 12. Dementsprechend steuert das Sicherheitsschaltgerät 26 zwei Schütze 28, 30 an, deren Arbeitskontakte in der Verbindung zwischen einer Stromversorgung 32 und dem Roboter 12 angeordnet sind. Alternativ zu dem Sicherheitsschaltgerät 26 könnte der Sicherheitsschalter 16 auch an eine programmierbare Sicherheitssteuerung angeschlossen sein, wie sie von der Anmelderin der vorliegenden Erfindung unter der Bezeichnung PSS® vertrieben wird.

Im Folgenden wird ein bevorzugtes Ausführungsbeispiel des neuen Sicherheitsschalters 16 beschrieben. Dabei bezeichnen gleiche Bezugszeichen dieselben Elemente wie zuvor.

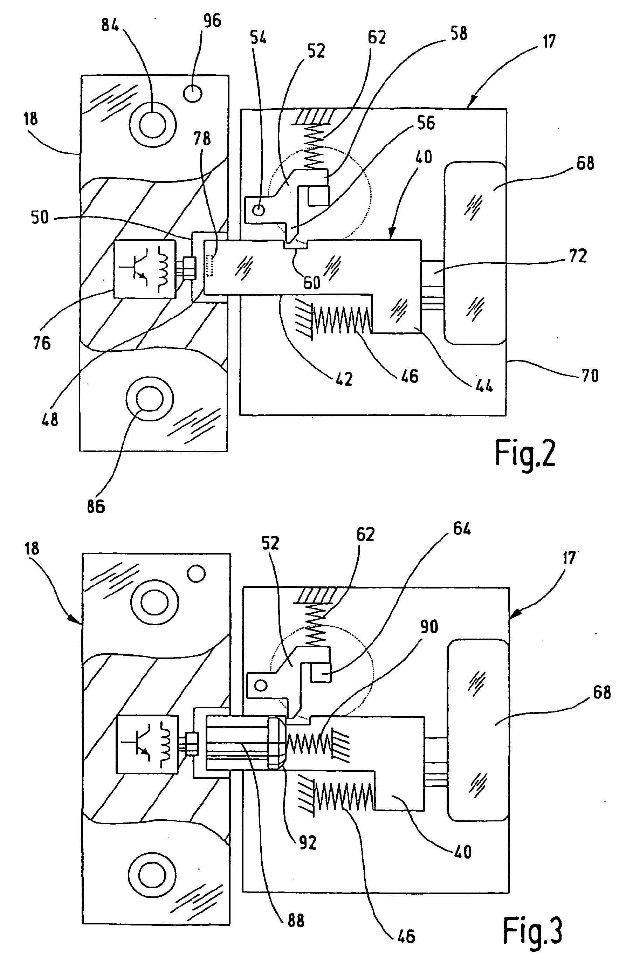

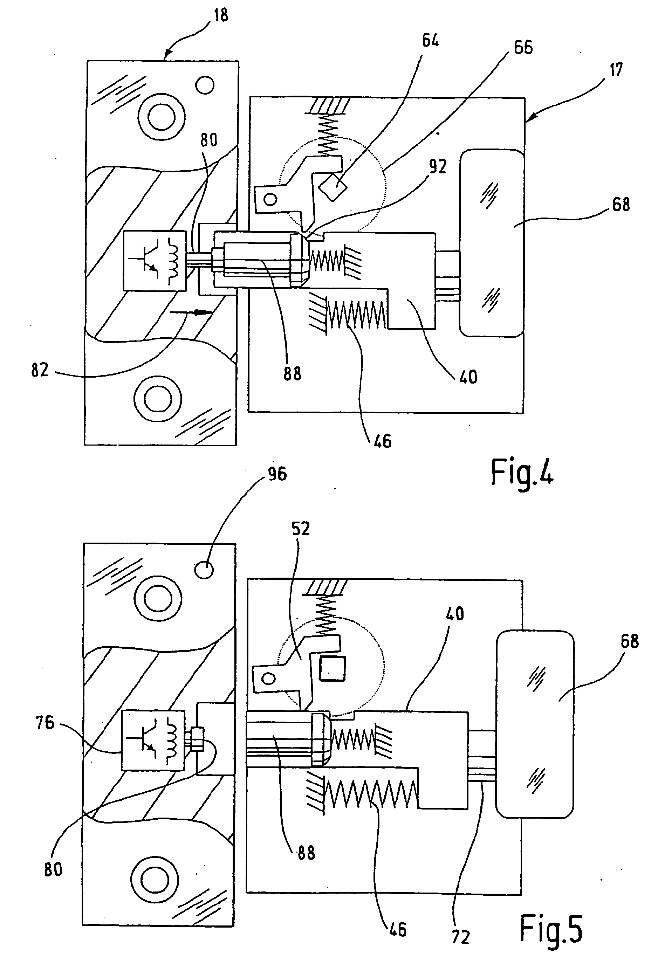

Wie in Fig. 2 dargestellt ist, beinhaltet das Türteil 17 des neuen Sicherheitsschalters 16 einen Betätiger 40, der zwischen einer ersten Position (dargestellt in Fig. 5) und einer zweiten Position (dargestellt in den Fig. 2 bis 4) bewegbar ist. Der Betätiger ist hier L-förmig ausgebildet und besitzt einen langen Schenkel 42 und einen kurzen Schenkel 44. Am kurzen Schenkel 44 greift eine (erste) Feder 46 an, die den Betätiger 40 in die erste Position (Fig. 5) vorspannt. In der zweiten Position (Fig. 2) ragt das freie Ende 48 des langen Schenkels 42 seitlich über das Türteil 17 hinaus, so dass es in eine Ausnehmung 50 eingreifen kann, die in dem Rahmenteil 18 ausgebildet ist. Die Ausnehmung 50 ist in diesem bevorzugten Ausführungsbeispiel etwa rechteckförmig, wobei die lichten Innenabmessungen (hier nicht bezeichnet) in allen Richtungen etwa 5 mm größer sind als die Außenabmessungen am freien Ende 48 des Betätigers 40.

Mit der Bezugsziffer 52 ist ein Sperrglied bezeichnet, das den Betätiger 40 gegen die Vorspannkraft der Feder 46 in der zweiten Position blockiert. Das Sperrglied 52 ist hier als Kipphebel ausgebildet, der um eine Achse 54 verschwenkbar ist. Der Kipphebel 52 besitzt zwei freie Enden 56, 58, die etwa senkrecht zueinander auslaufen. In der in Fig. 2 dargestellten Betriebsstellung greift das freie Ende 56 des Kipphebels 52 in eine Öffnung 60 ein, die an der oberen Längsseite des Betätigers 40 ausgebildet ist. Hierdurch wird der Betätiger 40 gegen die Vorspannung der Feder 46 in der zweiten Position gehalten. Am freien Ende 58 greift eine zweite Feder 62 an, die den Kipphebel 52 in die in Fig. 2 dargestellte, sperrende Position vorspannt. Außerdem liegt das freie Ende 58 auf einer quadratisch ausgebildeten Drehachse 64 (Fig. 3 und 4) auf, die über ein Handrad 66 um 45° verdreht werden kann (Fig. 4). In der um 45° verdrehten Position bewegt die Drehachse 64 den Kipphebel 52 gegen die Vorspannkraft der Feder 62 nach oben, so dass das freie Ende 56 den Betätiger 40 freigibt. Das nur schematisch angedeutete Handrad 66 ist optional und von der Innenseite der Schutztür 14 zugänglich, um die Schutztür 14 bei aktivierter Zuhaltung von Hand öffnen zu können (Notentriegelung). Bevorzugt ist das Handrad 66 dabei so angeordnet, dass es von der Außenseite der Schutztür 14 nicht zugänglich ist. Ergänzend hierzu kann die Drehachse 64 auch von der Außenseite der Schutztür 14 her zugänglich sein, um eine Notentriegelung auch von der Außenseite her zu ermöglichen. In diesem Fall ist die Drehachse 64 vorteilhafterweise hinter einer Abdeckung (hier nicht dargestellt) angeordnet, die nur durch einen Siegelbruch oder dgl. Geöffnet werden kann.

Mit der Bezugsziffer 68 ist ein Handgriff bezeichnet, der im Gehäuse 70 des Türteils 17 versenkt angeordnet ist. Der Handgriff 68 ist über einen Bolzen 72 mit dem Betätiger 40 verbunden. Diese Konstruktion ermöglicht es, dass der Handgriff 68 einer Bewegung des Betätigers 40 folgt. In der in Fig. 2 dargestellten Betriebsposition ist der Handgriff 68 bündig im Gehäuse 70 des Türteils 17 versenkt (Fig. 2). Wenn sich der Betätiger 40 in seiner ersten, zurückgeschobenen Position befindet, ist der Handgriff 68 aus dem Gehäuse 70 herausgeschoben (Fig. 5). In dieser Position kann der Handgriff 68 erfasst werden, um die Schutztür 14 zu schließen und dann den Betätiger 40 gegen die Vorspannkraft der Feder 46 in die zweite Position zu bewegen. Dabei signalisiert der außenstehende Handgriff 68 (Fig. 5), dass sich der Betätiger 40 in der ersten Position befindet, die Schutztür 14 also nicht verriegelt ist.

Mit der Bezugsziffer 76 ist ein Sensor- und Aktor-Schaltkreis bezeichnet, der in dem Rahmenteil 18 im Bereich der Ausnehmung 50 angeordnet ist. Der Sensor-/Aktor-Schaltkreis 76 ist einerseits dazu ausgebildet, einen Transponder 78 auszulesen, der an der Stirnseite am freien Ende 48 des Betätigers 40 angeordnet ist. Der Transponder 78 ist in diesem Fall so an der Stirnseite des Betätigers 40 angeordnet, dass er von dem Sensor-/Aktor-Schaltkreis 76 nur ausgelesen werden kann, wenn das freie Ende 48 des Betätigers 40 in die Ausnehmung 50 weit genug hineinragt. In dieser Position ist der Betätiger 40 dann durch den Kippehebel 52 blockiert. Des weiteren ist der Sensor-/Aktor-Schaltkreis 76 dazu ausgebildet, einen im Bereich der Ausnehmung 50 angeordneten Stößel 80 (Fig. 4) in Richtung des Pfeils 82 vorzuschieben. Die Funktion des Stößels 80 wird nachfolgend anhand der Fig. 3 und 4 erläutert.

Schließlich ist bei der Bezugsziffer 84 ein Not-Aus-Taster und bei der Bezugsziffer 86 ein Quittungstaster schematisch dargestellt. Der Not-Aus-Taster 84 dient dazu, einen Notstopp des Roboters 12 von Hand auszulösen. Hierzu wird der Not-Aus-Taster 84 in an sich bekannter Weise von dem Sicherheitsschaltgerät 26 überwacht. Der Quittungstaster 86 dient dazu, ein Schließen der Schutztür 14 inklusive Vorschieben des Betätigers 40 nochmals zu bestätigen. Das Ausgangssignal des Quittungstasters 86 kann von dem Sicherheitsschaltgerät 26 eingelesen werden, um in Abhängigkeit davon einen Wiederanlauf des Roboters 12 zu ermöglichen.

Wie in Fig. 3 dargestellt ist, ist der erste Schenkel 42 des Betätigers 40 in einem bevorzugten Ausführungsbeispiel hohl ausgebildet. Im Innern des hohlen Schenkels 42 ist ein Stellglied in Form eines Schiebers 88 angeordnet. Der Schieber 88 ist über eine dritte Feder 90 gegen das freie Ende 48 des Betätigers 40 vorgespannt. Auf seiner vom freien Ende 48 des Betätigers 40 abgewandten Seite besitzt der Schieber 88 eine Schräge 92, die dazu ausgebildet ist, das freie Ende 56 des Kipphebels 52 anzuheben, um den Kipphebel 52 in die in Fig. 4 dargestellte, angehobene Position zu bringen. Der Schieber 88 wirkt damit als Stellglied, mit dem sich die Verriegelung des Betätigers 40 alternativ zu der Notbetätigung am Handrad 66 bzw. der Drehachse 64 lösen lässt.

Die Funktionsweise des neuen Sicherheitsschalters 16 ergibt sich damit wie folgt: Im geschlossenen und verriegelten Zustand greift das freie Ende 48 des Betätigers 40 in die Ausnehmung 50 am Rahmenteil 18 ein. Der Schieber 88 ist über die Feder 90 zum freien Ende 48 hin vorgespannt. Das Ende 56 des Kipphebels 52 ragt in die Öffnung 60 des Betätigers 40 hinein und blockiert den Betätiger 40 damit gegen die Vorspannkraft der Feder 46. In diesem Zustand ist die Schutztür 14 verriegelt und blockiert. Der Kipphebel 52 bewirkt eine Zuhaltung, die nur durch aktiven Eingriff gelöst werden kann. Der geschlossene Zustand der Schutztür wird von dem Sensor-/Aktor-Schaltkreis 76 mit Hilfe des Transponders 78 detektiert und dem Sicherheitsschaltgerät 26 gemeldet. Das Sicherheitsschaltgerät 26 gibt aufgrund der geschlossenen Schutztür 14 den Betrieb des Roboters 12 frei, indem es die Arbeitskontakte der Schütze 28, 30 schließt.

Soll nun der Arbeitsbereich des Roboters 12 betreten werden, muss zunächst der Roboter 12 in eine sichere Betriebsposition gebracht werden, beispielsweise abgeschaltet werden. Die sichere Betriebsposition wird mit Hilfe von Sensoren (hier nicht dargestellt) detektiert. Alternativ kann ein Zeitglied vorgesehen sein, das mit dem Abschalten des Roboters 12 getriggert wird. Nach Ablauf einer vom Zeitglied (hier nicht dargestellt) festgelegten Zeitdauer wird eine sichere Ruheposition des Roboters 12 angenommen. Um nun die Schutztür zu öffnen, muss zunächst der Betätiger 40 entsperrt werden. Dies geschieht, indem das Sicherheitsschaltgerät 26 ein Freigabesignal an den Sensor-/Aktor-Schaltkreis 76 überträgt. Der Sensor-/Aktor-Schaltkreis 76 betätigt daraufhin den Stößel 80 in Richtung des Pfeils 82 (Fig. 4). Durch das Vorschieben des Stößels 80 wird der Schieber 88 ebenfalls in Richtung des Pfeils 82 (gegen die Feder 90) vorgeschoben. Aufgrund der Schräge 92 wird dadurch der Kipphebel 52 gegen die Kraft der Feder 62 angehoben. Die Feder 46 sorgt nun dafür, dass der Betätiger 40 entlang seiner Bewegungsachse (in Richtung des Pfeils 82) zurückgeschoben wird. Außerdem wird durch das Zurückfahren des Betätigers 40 der Handgriff 68 ausgefahren. Nun ist ein Öffnen der Schutztür 14 möglich (Fig. 5).

Um ein ungewolltes Aufspringen der Schutztür 14 bei Vorliegen des Freigabesignals vom Sicherheitsschaltgerät 26 zu verhindern, kann das Freigabesignal vom Sicherheitsschaltgerät 26 über einen Taster 94 (Fig. 1) geführt sein, der manuell betätigt werden muss, um die Schutztür 14 tatsächlich freizugeben. Besonders vorteilhaft kann der Taster 94 als Impulsgeber ausgebildet sein, da für die Entriegelung der Schutztür 14 lediglich ein kurzer Energieimpuls benötigt wird, der ausreicht, um den Stößel 80 soweit vorzuschieben, dass der Schieber 88 den Kipphebel 52 in der beschriebenen Weise anhebt. Aufgrund der rein mechanischen Ausgestaltung des Türteils 17 wird kein Dauerstrom zum Entriegeln der Schutztür 14 benötigt.

Zum Schließen kann die Schutztür 14 an dem ausgefahrenen Handgriff 68 zugezogen werden. Durch Einschieben des Handgriffs 68 wird der Betätiger 40 wieder in die Ausnehmung 50 vorgeschoben. Sobald das freie Ende 56 des Kipphebels 52 in die Öffnung 60 eingreift, ist der Betätiger 40 wieder blockiert. Der geschlossene Zustand der Schutztür wird dann mit Hilfe des Transponders 78 detektiert und dem Sicherheitsschaltgerät 26 gemeldet.

Bei Bezugsziffer 96 ist schematisch ein Leuchtmittel, beispielsweise eine LED, dargestellt, die in Ergänzung oder alternativ zu dem versenkbaren Handgriff 68 die Position des Betätigers 40 signalisiert. In der in Fig. 5 gezeigten Position ist das Leuchtmittel 96 beispielsweise grün, während es in der verriegelten Position in Fig. 2 rot ist.

In dem dargestellten Ausführungsbeispiel sind sämtliche Federn 46, 62, 90 als Druckfedern ausgebildet, was von Vorteil ist, weil Druckfedern eine höhere Funktionssicherheit bieten als Zugfedern. Eine Druckfeder kann selbst bei einem Federbruch noch eine gewisse Federspannung halten, wohingegen eine Zugfeder bei einem Federbruch stets versagt.

## Patentansprüche

1. Sicherheitsschalter zum Erzeugen eines Freigabesignals in Abhängigkeit von der Position einer beweglichen Schutztür (24), mit einem Türteil (17) zum Befestigen an der beweglichen Schutztür (14), mit einem Rahmenteil (18) zum Befestigen an einem Türgegenstück (20), mit einem Betätiger (40), der zwischen einer ersten und einer zweiten Position verstellbar ist, wobei der Betätiger (40) in der zweiten Position in eine Ausnehmung (50) eingreifen kann, ferner mit einem Sperrglied (52), das dazu ausgebildet ist, den Betätiger (40) in der zweiten Position zu blockieren, wobei das Sperrglied (52) zwischen einer dritten und einer vierten Position verstellbar ist, wobei die dritte Position dazu ausgebildet ist, den Betätiger (40) in der zweiten Position zu blockieren, und mit einem Sensor (76), der dazu ausgebildet ist, zumindest eine der Positionen des Betätigers (40) eindeutig zu detektieren, um in Abhängigkeit davon das Freigabesignal zu erzeugen, wobei der Betätiger (40) und das Sperrglied (52) an dem Türteil (17) angeordnet sind, wobei das Türteil (17) eine zweite Feder (62), vorzugsweise eine Druckfeder, aufweist, die das Sperrglied (52) in der dritten Position vorspannt, und wobei das Rahmenteil (18) die Ausnehmung (50) und eine Aktor (80) aufweist, wobei der Aktor (80) dazu ausgebildet ist, das Sperrglied (52) gegen die zweite Feder (62) in die vierte Position zu bewegen.

2. Sicherheitsschalter nach Anspruch 1, **dadurch gekennzeichnet, dass** der Betätiger (40) ein freies Ende aufweist, das zumindest in der Vertikalen weitgehend spiegelsymmettisch ausgebildet ist

3. Sicherheitsschalter nach Anspruch 1 oder 2, **dadurch gekennzeichnet, dass** der Sensor (76) dazu ausgebildet ist, die zweite Position des Betätigers (40) fehlersicher zu detektieren.

4. Sicherheitsschalter nach einem der Ansprüche 1 bis 3, **dadurch gekennzeichnet, dass** der Sensor (76) an dem Rahmenteil (18) angeordnet ist, und zwar vorzugsweise im Bereich der Ausnehmung (50).

5. Sicherheitsschalter nach einem der Ansprüche 1 bis 4, **dadurch gekennzeichnet, dass** der Sensor (76) zum Auslesen einer ID-Marke (78) ausgebildet ist und dass der Betätiger (40) eine ID-Matke (78) beinhaltet, die so angeordnet ist, dass sie in einer der zwei Positionen von dem Sensor (76) auslesbar ist.

6. Sicherheitsschalter nach Anspruch 5, **dadurch gekennzeichnet, dass** die ID-Marke (78) an einer Stirnseite (48) des Betätigers (40) angeordnet ist, die in et wa quer zur Bewegungsrichtung des Betätigers (40) liegt.

7. Sicherheitsschalter nach einem der Ansprüche 1 bis 6; **dadurch gekennzeichnet, dass** das Türteil (17) eine erste Feder (46), vorzugsweise eine Druckfeder, aufweiset, die den Betätiger (40) in die erste Position vorspannt.

8. Sicherheltsschalter nach einem des Ansprüche 1 bis 7, **gekennzeichnet durch** einen Impulsgeber (94), über den der Aktor (80) kurzzeitig mit Antriebsenergie beaufschlagbar ist.

9. Sicherheitsschalter nach einem des Ansprüche 1 bis 8, **dadurch gekennzeichnet, dass** das Türteil (17) ein Stellglied (88) aufweist, das zwischen einer fünften und einer sechsten Position bewegbar ist, wobei der Aktor (80) das Stellglied (88) in die fünfte Position bewegt, um das Sperrglied (52) gegen die zweite Feder (62) in die vierte Position zu bewegen.

10. Sicherheitsschalter nach Anspruch 9, **dadurch gekennzeichnet, dass** das Stellglied (88) entlang von einer Bewegungsachse (82) bewegbar ist, die in etwa parallel zu der Bewegungsnchtung des Betätigers (40) verläuft.

11. Sicherheitsschalter nach Anspruch 9 oder 10, **dadurch gekennzeichnet, dass** das Stellglied (88) innerhalb des Betätigers (40) angeordnet ist.

12. Sicherheitsschalter nach einem der Ansprüche 9 bis 11, **gekennzeichnet durch** eine dritte Feder (90), die das Stellglied (88) in der sechsten Position vorspannt

13. Sicherheitsschalter nach einem der Ansprüche 1 bis 12, **dadurch gekennzeichnet, dass** das Türteil (17) einen Handgriff (68) aufweist, der zwischen einer greifbaren und einer versenkten' Position bewegbar ist, wobei der Handgriff (68) so mit dem Betätiger (40) gekoppelt ist, dass sich der Handgriff (68) in der versenkten Position befindet, wenn der Betätiger (40) in der zweiten Position ist.

14. Sicherheitsschalter nach einem der Ansprüche 1 bis 13, **gekennzeichnet durch** einen Not-Aus-Taster (84) und/oder einen Quittungstaster (86).

## Claims

1. A safety switch for generating an enable signal as a function of a position of a moveable guard door (14), comprising a door part (17) to be fixed to the moveable guard door (14) and comprising a frame part (18) to be fixed to a mating door piece (20), comprising an activator (40) which can be displaced between a first and a second position, wherein said activator (40) can engage in a cutout (50) in said second position, further comprising a locking element (52) designed to lock the activator (40) in said second position, wherein the locking element (52) is adapted to be displaced between a third and a fourth position, with the third position being designed to lock the activator (40) in said second position, and comprising a sensor (76) designed to detect at least one of the positions of the activator (40) in order to generate the enable signal as a function thereof, wherein the activator (40) and the locking element (52) are arranged on the door part (17), wherein the door part (17) has a second spring (62), preferably a compression spring, for prestressing the locking element (52) in said third position, and wherein the frame part (18) comprises the cutout (50) and the activator (40), wherein the activator (80) is designed to move the locking element (52) into said fourth position counter to the second spring (62).

2. The safety switch according to Claim 1, **characterized in that** the activator (40) has a free end, which is designed substantially mirror-symmetrical in the vertical.

3. The safety switch according to Claim 1 or 2, **characterized in that** the sensor (76) is designed to detect the second position of the activator (40) in a failsafe manner.

4. The safety switch according to one of Claims 1 to 3, **characterized in that** the sensor (76) is arranged on the frame part (18), and more preferably in the region of the cutout (50).

5. The safety switch according to one of Claims 1 to 4, **characterized in that** the sensor (76) is designed for reading an ID tag (78), and **in that** the activator (40) includes an ID tag (78) arranged such that it can be read in one of the two positions by the sensor (76).

6. The safety switch according to Claim 5, **characterized in that** the activator (40) has a front side (48) positioned substantially transversely with respect to its direction of movement, with the ID tag (78) being arranged at the front side (48).

7. The safety switch according to one of Claims 1 to 6, **characterized in that** the door part (17) has a first spring (46), preferably a compression spring, for prestressing the activator (40) into the first position.

8. The safety switch according to one of Claims 1 to 7, **characterized by** a pulse generator (94) for supplying drive energy to the actuator (80) for a short period of time.

9. The safety switch according to one of Claims 1 to 8, **characterized in that** the door part (17) has an actuating element (88) moveable between a fifth and a sixth position, with the actuator (80) moving the actuating element (88) into the fifth position in order to move the locking element (52) into the fourth position counter to the second spring (62).

10. The safety switch according to Claim 9, **characterized in that** the actuating element (88) is adapted to move in a direction of movement (82), which runs substantially parallel to the direction of movement of the activator (40).

11. The safety switch according to Claim 9 or 10, **characterized in that** the actuating element (88) is arranged within the activator (40).

12. The safety switch according to one of Claims 9 to 11, **characterized by** a third spring (90) for prestressing the actuating element (88) in the sixth position.

13. The safety switch according to one of Claims 1 to 12, **characterized in that** the door part (17) has a handle (68) adapted to be moved between an extended position in which it can be gripped and a retracted position, with the handle (68) being coupled to the activator (40) such that the handle (68) is located in the retracted position when the activator (40) is in the second position.

14. The safety switch according to one of Claims 1 to 13, **characterized by** an emergency stop pushbutton (84) and/or an acknowledge pushbutton (86).

## Revendications

1. Interrupteur de sécurité destiné à produire un signal de libération en relation avec la position d'une porte de sécurité mobile (14), avec une partie de porte (17) à fixer à la porte de sécurité mobile (14), avec une partie de châssis (18) à fixer à une pièce de porte opposée (20), avec un actionneur (40), qui est réglable entre une première position et une deuxième position, dans lequel l'actionneur (40) dans la deuxième position peut s'engager dans un évidement (50), avec en outre un organe d'arrêt (52), qui est conçu pour bloquer l'actionneur (40) dans la deuxième position, dans lequel l'organe d'arrêt (52) est réglable entre une troisième position et une quatrième position, dans lequel la troisième position est destinée à bloquer l'actionneur (40) dans la deuxième position, et avec un détecteur (76), qui est conçu de façon à détecter clairement au moins une des positions de l'actionneur (40), afin de produire le signal de libération en fonction de celle-ci, dans lequel l'actionneur (40) et l'organe d'arrêt (52) sont disposés sur la partie de porte (17), dans lequel la partie de porte (17) présente un deuxième ressort (62), de préférence un ressort de pression, qui précontraint l'organe d'arrêt (52) dans la troisième position, et dans lequel la partie de châssis (18) présente l'évidement (50) et un actionneur (80), dans lequel l'actionneur (80) est conçu de façon l'organe d'arrêt (52) dans la quatrième position contre le deuxième ressort (62).

2. Interrupteur de sécurité selon la revendication 1, **caractérisé en ce que** l'actionneur (40) présente une extrémité libre, qui est réalisée de façon largement symétrique au moins en direction verticale.

3. Interrupteur de sécurité selon la revendication 1 ou 2, **caractérisé en ce que** le détecteur (76) est conçu de façon à détecter sans erreur la deuxième position de l'actionneur (40).

4. Interrupteur de sécurité selon l'une quelconque des revendications 1 à 3, **caractérisé en ce que** le détecteur (76) est disposé sur la partie de châssis (18), notamment de préférence dans la région de l'évidement (50).

5. Interrupteur de sécurité selon l'une quelconque des revendications 1 à 4, **caractérisé en ce que** le détecteur (76) est conçu de façon à lire une marque ID (78) et **en ce que** l'actionneur (40) comporte une marque ID (78), qui est disposée de telle manière qu'elle soit lisible par le détecteur (76) dans une des deux positions.

6. Interrupteur de sécurité selon la revendication 5, **caractérisé en ce que** la marque ID (78) est disposée sur une face frontale (48) de l'actionneur (40), qui est sensiblement transversale à la direction de déplacement de l'actionneur (40).

7. Interrupteur de sécurité selon l'une quelconque des revendications 1 à 6, **caractérisé en ce que** la partie de porte (17) présente un premier ressort (46), de préférence un ressort de pression, qui précontraint l'actionneur (40) dans la première position.

8. Interrupteur de sécurité selon l'une quelconque des revendications 1 à 7, **caractérisé par** un générateur d'impulsions (94), par lequel l'actionneur (80) peut être soumis brièvement à une énergie d'entraînement.

9. Interrupteur de sécurité selon l'une quelconque des revendication 1 à 8, **caractérisé en ce que** la partie de porte (17) présente un organe de réglage (88), qui est déplaçable entre une cinquième position et une sixième position, dans lequel l'actionneur (80) déplace l'organe de réglage (88) dans la cinquième position, afin de déplacer l'organe d'arrêt (52) dans la quatrième position contre le deuxième ressort (62).

10. Interrupteur de sécurité selon la revendication 9, en ce que l'organe de réglage (88) est déplaçable le long d'un axe de déplacement (82), qui est sensiblement parallèle à la direction de déplacement de l'actionneur (40).

11. Interrupteur de sécurité selon la revendication 9 **caractérisé en ce que** l'organe de réglage (88) est disposé à l'intérieur de l'actionneur (40).

12. Interrupteur de sécurité selon l'une quelconque des revendications 9 à 11, **caractérisé par** un troisième ressort (90), qui précontraint l'organe de réglage (88) dans la sixième position.

13. Interrupteur de sécurité selon l'une quelconque des revendications 1 à 12, **caractérisé en ce que** la partie de porte (17) présente poignée (68), qui est déplaçable entre une position saisissable et une abaissé, dans lequel la poignée (68) est couplée à l'actionneur (40), de telle manière que la poignée (68) se trouve dans la position abaissée, lorsque l'actionneur (40) se trouve dans la deuxième position.

14. Interrupteur de sécurité selon l'une quelconque des revendications 1 à 13, **caractérisé par** un bouton d'arrêt d'urgence (84) et/ou boulon d'acquittement (86).
